# EUROPEAN PATENT SPECIFICATION

(11) **EP 2 788 127 B1**
(45) Date of publication and mention of the grant of the patent: **09.09.2015**
(21) Application number: 12799121.4
(22) Date of filing: 04.12.2012
(51) Int. Cl.: B07C 5/34, B65B 5/04, B65B 35/58, B65B 57/00, B65B 61/02, B65B 61/26, G06K 7/10

(54) **READOUT DEVICE FOR READING OUT MACHINE-READABLE MARKINGS ON RECEPTACLES**
AUSLESEVORRICHTUNG ZUM AUSLESEN MASCHINENLESBARER MARKIERUNGEN AUF BEHÄLTERN
DISPOSITIF DE LECTURE POUR MARQUAGES LISIBLES PAR MACHINE SUR RÉCIPIENTS

(30) Priority: 05.12.2011 EP 11191884; 21.11.2012 US 201261728983 P
(43) Date of publication of application: 15.10.2014
(73) Proprietor: Vesdo Ltd., 8823 Wollerau (CH)
(72) Inventor: TOEDTLI, Sergej, CH-8832 Wollerau (CH)
(74) Representative: Herzog, Fiesser & Partner Patentanwälte PartG mbB
(86) International application number: PCT/EP2012/074318
(87) International publication number: WO 2013/083544

(56) References cited:
- DE-A1- 3 241 489
- DE-A1-102006 011 143
- JP-A- 2002 087 511
- US-A1- 2006 163 397

## Description

### Field of the Invention

The invention relates to a readout device and a method for reading out machine-readable markings on receptacles. The invention further relates to a filling device for filling a plurality of receptacles with at least one content, a use of the readout device and a method for filling a plurality of receptacles with at least one content. The invention further relates to a packaging device and a method for packaging a plurality of receptacles in at least one outer packaging. Devices and methods of this type are used for example in the production and/or filling of medical, diagnostic or pharmaceutical containers, for example to introduce at least one diagnostic agent and/or at least one pharmaceutical into at least one receptacle. For example, these may be liquid and/or solid and/or gaseous diagnostic agents and/or pharmaceuticals. Another possible field of use of the invention lies for example in the production of foodstuffs or in the filling of foodstuffs. Other fields of use are also conceivable.

### Prior Art

The coding and marking of receptacles plays an important role in many fields of natural sciences, technology, medicine and pharmacy as well as daily life. Reference will be made hereinafter in particular to the filling of pharmaceutical and/or diagnostic receptacles with at least one content, for example at least one pharmaceutical, that is to say a pharmaceutical active ingredient, and/or at least one diagnostic agent. Coding and marking of receptacles also plays an important role in other fields however, such as in the field of food engineering, in particular when filling foodstuffs into corresponding receptacles.

In particular in pharmacy, it must generally be ensured, for example before, during or after filling therapeutic active ingredients and/or diagnostic agents, that it is possible to check which pharmaceutical material is contained in the receptacle at any moment during and/or after the filling of pharmaceutical materials, such as medicaments. In addition, information concerning e.g. the type of filling process, the production date, a dosage or the like is of considerable importance, wherein it should be easy to check this information again at a later time, for example when packaging the pharmaceutical receptacles, or by a user of the pharmaceutical material.

A key point is to provide a so called "mix-up protection". Mix-up protection of this type is intended to ensure that the receptacles and/or the contents are prevented from becoming confused, even in a filling facility in which different types of pharmaceutical materials and/or pharmaceutical materials having different properties, such as different active ingredient concentrations, are filled.

For this purpose, numerous methods and devices are known from the prior art, by means of which pharmaceutical receptacles could be coded. For example, WO 2006/117692 A1 describes a method for identifying a glass container, in which the temperature of the glass container is kept at a value below the glass transition temperature in a marking step. Treatment with electromagnetic radiation is then carried out at specific points, as a result of which the glass of the receptacle is modified and thus marked at specific points. Similar laser marking methods are also described in DE 10 122 335 C1 or in DE 10 234 002 B4.

In addition to coding methods in which the receptacles are marked using a laser, other methods for applying markings, such as barcodes, are also known. For example, colour codes or barcodes applied by means of screen printing methods may thus be used. In addition to screen printing methods, a range of alternative techniques are available for the printing of barcodes, such as inkjet printing, thermal transfer printing or laser printing methods. Markings in the form of labels can also be applied to the receptacles, either alternatively or in addition. It is possible, again either alternatively or in addition, to use random structures of the receptacles as a machine-readable marking of the receptacles and therefore for clear identification of the receptacles, as described in WO 2009/071445 A1 for example.

The marking of the receptacles can be used for a large number of different purposes. For example, an individual marking of the surface of the receptacles, for example glass receptacles, with a barcode may be necessary, for example by means of a label or without a label. For example, in the pharmaceutical industry glass receptacles are filled for disposable syringes, ampoules or vials and are stored, unlabelled, for further use in a store. Although the superordinate packaging units are generally inscribed, instances of confusion cannot be ruled out with certainty. Such an identification by means of a least one machine-readable marking is likewise useful to ensure traceability of each individual receptacle during its life-cycle. For example, traceability of this type, which is also referred to as track-and-trace, may be important for distinguishing between originals and fakes and/or for being able to reconstruct production problems. In addition to pharmaceutical products, traceability may also be useful for other products, such as noble wines, high-quality spirits or cooking oils.

The machine-readable marking used to mark the receptacles can be designed in various ways. For example, this machine-readable marking may thus comprise a clear identification of the receptacle, for example a unique number or combination of letters. At least one piece of information concerning the receptacle and/or the content thereof for example may then be stored in a database in addition to this identification. Information enabling for example the specification of the content, the filling time or filling line can be coded directly into the machine-readable marking, either alternatively or in addition. The machine-readable marking may however, either alternatively or in addition, also comprise information that goes beyond mere identification. For example, one-dimensional or two-dimensional barcodes may thus be used, which for example may contain information concerning a content of the receptacle and/or a use of the content and/or a manufacturer or filler of the receptacle.

Within the scope of track-and-trace systems, which are increasingly becoming statutory, not only are the individual packagings provided with a code, but also the exterior packagings manufactured therefrom, such as bundles and cartons to shipping cartons and pallets. When forming these packaging hierarchies, the codes are read out and filed in a database such that the entire packaging hierarchy is recorded. It is thus possible to massively simplify the logistical processes. In the American market, round plastic bottles are very often used for pharmaceutical products, although the reading-out of the codes on the labels constitutes a significant problem when creating the described packaging hierarchy. The presented invention can also be used in this context to read out the barcodes on the labels of round bottles.

The machine-readable marking should generally be fixedly connected to the receptacle. Accordingly, the machine-readable marking may be applied for example to at least one surface of the receptacle, for example to a cylindrical part of a lateral surface of the receptacle.

In many cases, the reading-out of the machine-readable marking poses a technical challenge. If, for example, this reading-out process may take place when filling the receptacles and/or when packaging the receptacles in an outer packaging. So that the marking can be read out, the receptacle, for example a glass body or a plastic bottle, generally has to be aligned in a prior process step. An alignment as such of this type, for example a rotation of the receptacle, does not generally pose a challenge in principle from a technical point of view.

US 2006/0163397 A1 discloses a readout device for reading out machine-readable markings on a lateral surface of cylindrical receptacles, wherein the readout device has an optical detector with a viewing region, wherein the optical detector is designed to detect the machine-readable markings in the viewing region, wherein the readout device further has a roll area and a transport device, wherein the readout device is designed to roll the receptacles in succession over the roll area by means of the transport device and, in so doing, to roll at least part of the lateral surface within the viewing region. The receptacles lie down on the roll area which is constituted by a rotating belt and the transport device in the form of a pusher moves the receptacles over said belt. This causes the receptacles to rotate over the belt and the optical detector can read a bar code on the receptacles. However, since the receptacles are lying down and are being pushed over the belt there is a risk that they bounce and move around so that is becomes difficult to properly read the bar codes.

Devices and methods for processing reusable packagings are known from US 2006/0163397 A1. In this case, an arrangement *inter alia* is proposed, which has an inlet shaft and a plurality of compressors. The packagings are slid through a scanning station by means of a slide. A scanning device that detects and reads out a barcode on the packagings by means of a scanning mirror is provided in said scanning station. The packagings are rotated in the scanning station by means of a conveyor band, which moves against a direction of the slide.

In practice and under production conditions, however, the solutions currently used for this purpose are generally expensive and bulky. In addition to the device described in US 2006/0163397 A1, constructions based on the use of rotatable spindles which are in turn arranged on carousels and transport the receptacles in front of a camera, where they are rotated, could also be used in principle for example. A construction of this type is extremely complex and cost-intensive however, and therefore in many cases can hardly be implemented from an economical point of view, in particular on an industrial scale.

### Object of the Invention

Accordingly, the object of the present invention is to provide devices and methods that enable machine-readable markings on receptacles to be read out and that avoid the above-mentioned disadvantages of known devices and methods. In particular, alignment and transportation of the receptacles in front of an inspection camera should be ensured by means of a simple mechanism. In addition, it should be ensured that receptacles having machine-readable markings that for example have been identified by the inspection camera as being illegible or unsuitable can be rejected or otherwise separated. Furthermore, the proposed device should be space-saving and should meet the requirements of industrial production.

### Disclosure of the Invention

This object is achieved by the invention by means of the features in the independent patent claims. Advantageous developments of the invention, which can be implemented individually or in any combination, are presented in the dependent claims.

In a first aspect of the present invention, a readout device and a method for reading out machine-readable markings on at least one lateral surface of receptacles are proposed. The readout device may be designed in particular to carry out a method according to the invention, and/or the method according to the invention may be carried out with use of a readout device according to the invention. Accordingly, reference can be made to the description of the method with regard to possible embodiments of the readout device, and vice versa.

Within the scope of the present invention, a readout device is generally to be understood to mean a device which is designed to detect the machine-readable marking and, in this case, to generate at least one piece of information, for example in the form of a digital piece of information and/or an electrical signal.

Accordingly, a readout is generally to be understood to mean a process in which the machine-readable marking is detected in full or in part and in which, in this case, at least one piece of information, for example in the form of a digital piece of information and/or an electrical signal, is generated. As will be described hereinafter in greater detail, the at least one piece of information may comprise at least one piece of information selected for example from the group consisting of information concerning a content of the receptacle, information concerning the receptacle itself, information concerning a filling process of the receptacle with at least one content, information concerning a manufacturer of the receptacle and/or a content of the receptacle, and information concerning a packager or filler. Alternatively or in addition however, the at least one piece of information may also be, or comprise, at least one piece of information concerning the machine-readable marking itself. The at least one piece of information generated during the readout process, for example, may thus be, or comprise, a piece of information concerning the quality of the machine-readable markings. In this case, for example, one or more quality data of the machine-readable markings may be generated, for example at least one piece of information concerning a state, a quality or a grade of the machine-readable markings or part thereof. The method for reading out machine-readable markings, as proposed within the scope of the present invention, may accordingly also be, or comprise, a method for evaluating a quality of the machine-readable markings, for example for evaluating quality data of the machine-readable markings. Similarly, the readout device may also be designed to evaluate a quality of the machine-readable markings, for example to evaluate quality data of the machine-readable markings.

In particular, the readout procedure may include a process in which at least one piece of information contained in the machine-readable marking is detected optically and is converted into a piece of information, for example a digital piece of information, that can be further processed by a machine, in particular a data processing device. Furthermore, the readout device may also be designed to further process the information completely or partially, for example within the scope of a decoding process, in which, for example, coded information present in the machine-readable marking are decoded completely or partially.

A machine-readable marking is generally to be understood to mean a marking which comprises at least one piece of information and which can be read out by means of a machine, in particular optically. For example, this machine-readable marking may comprise at least one identification and/or one or more further pieces of information. Once read out, the information may be present in digital form in particular.

A machine-readable marking on at least one lateral surface of receptacles is to be understood in this case to mean a machine-readable marking which either is arranged directly on the lateral surface or is arranged otherwise in the receptacle, such that this machine-readable marking can be detected and read out from the lateral surface of the receptacle. For example, machine-readable markings in the form of labels applied to the lateral surface may thus be used. Alternatively or in addition, the machine-readable markings may also be connected directly to the lateral surface and/or introduced into at least one receptacle wall of the receptacle, which is defined by the lateral surface, for example in lower layers of the receptacle wall. For example, printing methods and/or laser inscription methods or else other methods can be used for this purpose. In particular, at least one marking can be connected to each lateral surface of each receptacle, such that at least one machine-readable marking is provided per receptacle.

Within the scope of the present invention, a receptacle is generally to be understood to mean a device that, in principle, is to be formed arbitrarily and that has at least one interior and can receive at least one content in this at least one interior. In particular, the receptacles can be selected from the group consisting of syringes, syringe bodies, ampoules, vials, bottles, screw-lid glass receptacles, snap-on lid glass receptacles, plastic bottles, in particular plastic bottles having a screw closure, medical containers, pharmaceutical containers and foodstuff containers. The receptacles may, in principle, be completely closed or else open in full or in part. The readout process may take place when the receptacles are in a filled state, in which at least one content has already been introduced into the receptacles, and/or in a completely or partially unfilled state. The receptacles may be produced in particular from glass, either completely or partially. Alternatively or in addition however, other materials may also be used, such as plastic, ceramic or paper. It is particularly preferable if the receptacles are completely or partially rotationally symmetrical, for example about at least one axis of rotation. For example, the receptacles may be receptacles that are completely or partially cylindrical, for example circular cylindrical receptacles, such as bottles having a round cross section, syringes having a round cross-section, cylindrical glass receptacles, cylindrical vials, cylindrical syringe bodies or similar receptacles.

A lateral surface of the receptacles is in principle to be understood to mean any surface of the receptacles that closes the receptacles outwardly, either completely or partially. For example, a lateral surface may be an outer surface pointing toward the outer face of the receptacles or an inner surface pointing toward an interior of the receptacles. In particular, the lateral surface may be an outer surface of the receptacles, which points away from an interior of the receptacles. In particular, this lateral surface may be a completely or partially cylindrical lateral surface, in particular a completely or partially cylindrical lateral surface of glass receptacles. In particular, the lateral surface may be circular cylindrical.

The receptacle wall of the receptacles may be transparent, either in full or part. In particular, the receptacle wall of the receptacles may be transparent at least in the at least one region in which the at least one machine-readable marking is applied directly or indirectly to the receptacle wall and/or is introduced into the receptacle wall and/or is otherwise connected to the receptacle wall. For example, the receptacle wall may be transparent, at least in part, in the region of an inner lateral surface of the receptacle.

The readout device has at least one optical detector with at least one viewing region. In this case, an optical detector is generally to be understood to mean any detector that is designed to detect, with use of electromagnetic radiation, in particular with use of light in the visible and/or ultraviolet and/or infrared spectral range, at least one piece of information contained in the machine-readable markings and to accordingly generate at least one piece of electrical information and/or at least one electrical signal. In particular, as will be described in greater detail further below, the detector may comprise at least one camera, in particular a digital camera, wherein one-dimensional or multi dimensional cameras can be used in principle. Alternatively or in addition however, other types of optical detectors may also be used, for example photodiode arrays and/or other types of detectors.

A viewing region is generally to be understood to mean a solid angle region and/or a one-dimensionally, two-dimensionally or three-dimensionally defined region, within which the optical detector can detect the machine-readable marking, either completely or partially. The viewing region particularly preferably covers a solid angle region. The detector is preferably designed to detect optical information simultaneously at a number of locations within the space, in particular over a spatial region of finite dimensions. The optical detector is generally designed to detect the machine-readable markings in the viewing region. In this case, detection is to be understood to mean a generation of at least one signal and/or at least one piece of information by the optical detector, which is influenced by the machine-readable marking and which in particular includes at least one piece of information contained in the machine-readable marking or at least one piece of information derived therefrom.

The readout device further comprises at least one roll area, such as at least one roll surface, and at least one transport device. The readout device is designed to roll the receptacles in succession over the roll area by means of the transport device and, in so doing, to roll at least part of the lateral surface within the viewing region. A roll area is generally to be understood to mean an area or surface over which the receptacles can be rolled with their lateral surface. The roll area can be dimensioned in particular in such a way that at least a quarter of a circumference, in particular at least half of a circumference, particularly preferably at least a circumference, or even at least 1.5 times a circumference, of the lateral surface can be rolled over the roll area within the viewing regions of at least one camera. The roll area may be flat in particular. Other embodiments of the roll area are also possible in principle however, for example curved embodiments. A transport device is generally to be understood to mean any device by means of which the receptacles can be rolled over the roll area. In particular, the transport device may comprise at least one actuator, which triggers the rolling process. The transport device is particularly preferably designed likewise to engage the lateral surface of the receptacles, preferably without engaging inside the receptacles. For example, the transport device may comprise at least one transport area, which is in contact with the lateral surface of the receptacles. As will be described in greater detail further below, the transport device may comprise at least one band conveyor and/or conveyor band in particular. For example, a gap may be provided between the transport device and the roll area, preferably a gap of constant thickness, within which the receptacles can be received and removed.

The transport device is designed to roll the receptacles in succession over the roll area and, in so doing, to roll at least part of the lateral surface within the viewing region. Rolling is to be understood in general to mean a process in which the receptacles are rotated about at least one axis, for example an axis of symmetry and particularly preferably a cylindrical axis, wherein the axis in turn moves relative to the roll area, for example moves at a preferably constant distance from the roll area parallel to the roll area.

Rolling of at least part of the lateral surface within the viewing region is to be understood in general to mean a process in which the above-described rolling operation is carried out in such a way that different portions of the lateral surface are arranged chronologically in succession within the viewing region and are detectable by the optical detector, such that the machine-readable markings can be detected by the optical detector.

The optical detector may in particular comprise at least one camera, wherein the viewing region preferably comprises a solid angle detectable by the camera. In addition, the viewing region may also be restricted to a depth of field region of the camera, for example by a suitable optical system, for example by means of at least one lens and/or at least one objective lens. For example, the camera may be at least one one-dimensional or two-dimensional digital camera, for example with a CCD and/or CMOS chip. Other types of cameras can also be used in principle however. The camera will also be referred to hereinafter as an inspection camera.

The viewing region and the roll area may preferably be dimensioned in such a way that the receptacles can be rolled at least once along their entire circumference within the viewing region. For this purpose, a camera having a solid angle that defines a path in a rolling direction of the receptacles over the roll area, said path being at least n times the diameter and/or the equivalent diameter of the receptacle in the region of the lateral surface, may be used for example. For example, this roll path may be set by a selection of a suitable camera and/or a suitable optical system and/or by a suitable distancing of the camera from the roll area.

As described above, the roll area may be a flat roll area in particular. Curved, for example convex or concave, roll areas are also possible for example however, in particular so as to ensure improved pressing of the receptacles onto the roll area by the transport device.

As described above, the transport device may in particular comprise at least one actuator, preferably an actuator that presses the receptacles onto the roll area and rolls them over the roll area. The actuator may in particular be completely or partially flexible.

In particular, the transport device may comprise at least one band conveyor and particularly preferably at least one conveyor belt. A band conveyor is generally to be understood to mean a band-shaped body, preferably an endless band, by means of which it is possible to act on the receptacles, for example on the lateral surface of the receptacles on a side opposite the roll area, wherein the receptacles can preferably be pressed against the roll area by means of the band conveyor. Alternatively or in addition to an endless band, the band conveyor may also comprise two or more segments however, that is to say it may be designed in full or in part as a segmented band for example or even as a link chain. For example, two or more segments may be provided, which are interconnected by a conveyor belt, a cable, a chain or another type of connecting element, wherein the segments together form a support surface that can come into contact with the receptacle. For example, a gap between the segments can be minimized in such a way that, during the rolling process, the receptacle can be transferred without difficulty from one segment to an adjacent segment. Alternatively, the endless band may also consist of, or be produced from, in full or in part, a flexible material having a round, oval or polygonal cross section.

The band conveyor may move at a distance from the roll area, wherein the receptacles can be arranged between the band conveyor and the roll area, and wherein the band conveyor is designed to move relative to the roll area and to roll receptacles over the roll area. If, in this context, reference is made to a movement of the transport device or of a part thereof, for example of the actuator and/or of the band conveyor and/or the conveyor belt, this is thus always to be understood within the meaning of a relative movement. This relative movement between the transport device and the roll area may include the option that the roll area is stationary, for example in a coordinate system of the entire readout device, and that the transport device moves in full or in part. Alternatively, the transport device may also be stationary in this coordinate system, wherein the roll area moves relative to the transport device. Again alternatively, both the transport device and the roll area may also move in the coordinate system, in which the readout device as a whole is stationary, wherein a relative movement between the roll area and the transport device is likewise implemented.

With receptacles having a large diameter in relation to the size of the machine-readable marking, for example of the barcode, the use of a long readout device is necessary in many cases with the use of a stationary roll area and in turn may lead to a large necessary viewing region for the readout device. Since the readout device should generally be as short as possible so as to correspond to the generally limited available space, for example in a production area, a small viewing region for the readout device is generally also advantageous, since low resolution cameras can then be used for example.

In particular, the roll area may be designed in full or in part as a surface of a stationary component, for example as a surface of a flat, fixedly arranged component. Alternatively or in addition, the roll area may also be flexible however, either in full or in part. Furthermore, as will be described in greater detail further below, the roll area may also be designed in full or in part as a movable roll area.

As described above, so as to achieve the desired short overall length, at least one continuously or intermittently moved roll area can also be used either alternatively or in addition to the use of at least one stationary roll area. For example, at least one band conveyor according to the above definition may thus be provided again as a roll area or as part thereof, wherein the at least one receptacle moves between the band conveyor of the transport device and the conveyor belt of the roll area. For example, at least one band conveyor that moves for example against a direction of conveyance and/or direction of transport of the receptacle can thus generally be used as a roll area. The resultant speed of transport of the receptacle is then given for example from the difference in the speeds of at least one optional actuator and the least one roll area. As a result of a corresponding selection of the speeds of these transport elements, at least one complete revolution of the receptacle itself can be achieved with a slow conveying speed. This additional band conveyor moving against the running direction of the actuator can run continuously or can be operated intermittently when the receptacle is located in the viewing region of the reading device.

If the readout device comprises at least one roll area, which is designed in full or in part as a movable roll area, the evaluation device may thus be designed in particular so as to move the roll area continuously, for example in a specific spatial direction, in particular parallel or antiparallel to a movement of the transport device and/or of a direction of transport of the receptacle.

Alternatively or in addition however, the readout device may also be designed however to move the roll area differently in at least two different operating phases.

For example, the readout device may thus be designed to move, in at least one transport phase, the movable roll area in the direction of transport of the at least one receptacle, preferably at the same speed at which the transport device also moves. For example, a band conveyor of the transport device and a band conveyor of the roll area can be moved in the transport phase in the direction of transport, preferably at the same speed. In this case for example, the receptacles would not be rolled over the roll area during the transport phase. Alternatively, the roll area may also move in the transport phase at a different speed from the speed of the transport device however, such that rolling occurs. In this case, a relative movement of the roll area and of the transport device, for example of a band conveyor of the roll area and of a band conveyor of the transport device, should still be designed however in such a way that the at least one receptacle is conveyed in the direction of transport.

Furthermore, the readout device may also be designed so as to move the roll area, in at least one readout phase, at a speed that is different from the speed of the transport device, for example a speed of a band conveyor of the transport device, in such a way that the at least one receptacle is rolled within the viewing region of the optical detector. Accordingly, the at least one readout phase is then preferably implemented when the at least one receptacle or, if a plurality of receptacles is provided, at least one of these receptacles, is located within the viewing region.

There are various possibilities for implementing the at least one readout phase, wherein a plurality of readout phases may also be provided. For example, as described above, the roll area may thus be fixed during the readout phase, that is to say stationary in a coordinate system of the readout device. Alternatively or in addition however, the roll area may also move during the entire readout phase or during part thereof at a speed different from the speed of the transport device, such that the above-described rolling process is carried out. It is particularly preferable if the readout device is designed to move the roll area during the at least one readout phase or at least during part thereof in a direction opposite the direction of movement of the transport device and/or the direction of transport. For example, the readout device may thus be designed to reverse a direction of movement of the roll area or part thereof during the at least one readout phase or part thereof compared to the transport phase. For example, the roll area may thus be moved in the direction of transport during the at least one transport phase, whereas an opposite movement may be provided in the at least one readout phase.

The roll area may thus particularly easily comprise at least one band conveyor, which, during the transport phase, moves parallel to the direction of movement of the least one receptacle, wherein a band conveyor of the transport device also moves parallel to the direction of movement of the receptacle during the transport phase. During a readout phase, the direction of movement of the roll area may then be reversed, such that the receptacle can thus roll within the viewing region virtually at one location or over a short path, such that the viewing region can be kept very small. For example, the viewing region may thus be limited to a width of the receptacle or a fraction thereof, wherein the machine-readable marking can still be read out.

The readout device may further comprise at least one supply station, which is designed to supply the receptacles in succession to the roll area. For example, the supply station may be designed to receive a plurality of receptacles and to position these in succession and individually in such a way that they contact the roll area via their lateral surface and can be rolled over the roll area.

The supply station is preferably designed to ensure the supply of the receptacles in succession at a uniform distance, such that a substantially constant distance between the receptacles is ensured during the rolling process. For example, the receptacles can be distanced in such a way that merely one receptacle is at any time arranged within the viewing region of the optical detector on the roll area.

In particular, the supply station may comprise at least one element, selected from the group consisting of: a gearwheel; a conveying wheel having a plurality of seats over the circumference for the receptacles; a supply shaft; a magazine for receiving a plurality of receptacles; at least one slide rail for supplying the receptacles.

The supply station may also be designed to align the receptacles before and/or during the supply process. In this case, alignment is to be understood to mean a process in which the receptacles are spatially oriented, for example by orienting one, two or three body axes of the receptacles parallel to predefined spatial directions of a coordinate system of the readout device. For this purpose, one or more actuators may be provided for example, which align the receptacles, for example as a result of a suitable rotation. For example, the actuators may comprise one or more contact areas, which are designed in such a way that the receptacles slide along these contact areas in a predefined orientation. Other types of alignment are also possible. For example, alignment may take place as explained in greater detail further below by means of a gearwheel and/or a conveying wheel that may have a plurality of seats over the circumference to receive the receptacles, wherein the receptacles are received in the seats in a predefined orientation. The orientation process may take place as soon as the receptacles slide into the seats or are otherwise introduced.

The supply station may also be designed to individualize the receptacles before and/or during the supply process. In this case, individualization is generally to be understood to mean a spatial separation of the receptacles, wherein it can be ensured for example that the receptacles are supplied to the roll area in succession and not in groups. In particular, the individualisation process may take place in such a way that the receptacles are supplied to the roll area at a predefined distance from one another. As described above, the individualisation process particularly preferably takes place in such a way that only one receptacle is at any time arranged within the viewing region of the optical detector. Similarly to the alignment process, the individualisation process may also take place for example by means of a least one gearwheel and/or at least one conveying wheel having a plurality of seats over the circumference for the receptacles. For example, the spacing of the seats along the circumference of the conveying wheel may individualize the receptacles, for example since one receptacle can be received in each seat. The spacing of the seats and/or a rotational speed of the conveying wheel may influence a spacing of receptacles over the roll area.

The supply station may preferably comprise two band conveyors running synchronously, in particular for the reading-out of plastic bottles, but also of other types of receptacles. These band conveyors may be arranged for example at a distance corresponding to a diameter or equivalent diameter of the receptacles, which may preferably be cylindrical. A linear movement of the receptacles can thus be ensured. The speed of conveyance of this supply station may be controlled in particular such that the receptacles are transported through the readout device or part thereof, for example through the viewing region of the optical detector, in an individualized and spaced manner, for example at a predefined distance.

The readout device may generally comprise at least one control. A control is generally to be understood to mean a device which can be designed in a centralized or decentralized manner and which is designed to influence, in particular to control and/or to regulate, one or more functions of the readout device. The control may also be designed to generate one or more pieces of information from the machine-readable markings of the receptacles, for example one or more pieces of digital information. The control may also be designed to decode one or more of these pieces of information for example. In particular, the control may comprise at least one data processing device, preferably at least one microcomputer. The control may also be integrated in full or in part into one or more further components of the readout device, for example into the optical detector.

The control is preferably connected to the optical detector. This can be achieved for example by providing at least one control line and/or at least one data line between the control and the optical detector, via which information and/or electrical signals and/or data and/or control commands can be exchanged unidirectionally or bidirectionally. Alternatively or in addition however, the control may also be integrated in full or in part into the optical detector.

The control is preferably designed to evaluate at least one piece of information, provided by the optical detector, concerning the machine-readable marking. For example, the detector may provide at least one electrical signal, wherein this may be an analogue and/or digital signal in principle, which is evaluated by the optical detector. In this case, an evaluation is to be understood to mean a complete or partial further processing of the information, for example a conversion of the information of the optical detector into one or more pieces of digital information, for example one or more numbers or into one or more alphanumeric characters and/or into one or more binary or hexadecimal pieces of information and/or a piece of information describing the quality of the machine-readable marking and/or the readability thereof (referred to as "grading"). These results of the evaluation may be filed for example in a data memory of the control and/or transmitted via at least one interface from the control to at least one further device.

In particular, the control can be designed to read out at least one barcode contained in the machine-readable markings. In this case, a barcode is generally to be understood to mean a one-dimensional, two-dimensional or three-dimensional piece of optical information, which is composed of optically distinguishable modules, for example of black and white stripes or of black and white fields. For example, the barcode may comprise an optical representation of data in binary symbols. In this case, all known types of barcodes can be used in principle, for example one-dimensional barcodes, two-dimensional barcodes and in particular rectangular or square barcodes. For example, conventional barcodes according to EAN standards can be used, for example DataBar, EAN 128, EAN-13, EAN-8. Alternatively or in addition, ISO standard barcodes can be used, for example Code 39, PDF 417. Again alternatively or in addition, two-dimensional barcodes such as Data Matrix, QR, Maxicodes or Aztec can be used.

The readout device may further comprise at least one selecting device, wherein the readout device is designed to sort the receptacles by means of the selecting device in accordance with a result of the readout of the machine-readable marking. A selecting device is therefore generally to be understood to mean a device that is designed for sorting, that is to say for dividing the receptacles into at least two groups. For example, sorting into precisely two groups may be undertaken, for example a first group, which is suitable and/or provided for filling and/or packaging, and a second group, which is not provided and/or suitable for filling and/or packaging. Another type of classification or sorting, for example in accordance with the quality and/or readability of the machine-readable marking, is also possible in principle. A device of this type may therefore also be used to separate out, in particular to eject, receptacles of which the machine-readable markings fail to meet the quality requirements.

In principle, the selecting device may comprise any actuator that is designed to sort the receptacles by means of a corresponding diversion of the receptacles. In particular, the selecting device may have at least one device for discharging receptacles. In this case, discharge is to be understood to mean a process in which the discharged receptacles are removed from a further process, for example an introduction, subsequent to the readout process, of at least one content into the receptacles and/or from a packaging process subsequent to the readout process, the receptacles being introduced in batches in said packaging process into at least one outer packaging.

As described above, the selecting device may comprise at least one actuator in particular. The selecting device may comprise at least one element, selected from the group consisting of an adjustable switch point; an ejection flap, in particular an ejection flap in the roll area, an actuator for selectively influencing a path of movement of individual receptacles; a compressed air control. Other embodiments and/or combinations of the aforementioned elements are also possible in principle, however.

In particular, the selecting device may be connected to at least one control of the readout device. For example, this control may be the above-described control, which is preferably connected to the optical detector and which is designed to evaluate at least one piece of information, provided by the optical detector, concerning the machine-readable markings. Alternatively or in addition however, the control may also be a different control. Reference can be made in general to the above description however with regard to the possible embodiments of the control. For example, the control may be designed to actuate the selecting device in accordance with at least one piece of information, provided by the optical detector, concerning the machine-readable markings. For example, the control may thus be designed to detect that there is no machine-readable marking on the receptacle and/or that the machine-readable marking has been identified, but indicates that the receptacle in question is to be discharged, for example since it is not intended or suitable for a subsequent filling process and/or packaging process. Again alternatively or in addition, the control may also be designed however to undertake a selecting process in more than two classes in accordance with the information contained in the machine-readable marking, for example such that different receptacles or receptacles that are to be filled differently are divided into more than two groups, for example for a subsequent packaging process and/or for a subsequent filling process.

The device may further have at least one illumination device in particular. In particular, the illumination device may be designed to illuminate at least part of the viewing region. In this case, a transmissive and/or a reflective and/or a scattering illumination may be used for example. Light in the visible and/or in the infrared and/or in the ultraviolet spectral range may be used for example. The illumination device may be designed for example to directly or indirectly illuminate the machine-readable at least one marking of a receptacle located in the viewing region. In this case, the machine-readable marking may be lit from behind and/or shone through for example. The illumination device may also be designed to make the at least one machine-readable marking luminesce, for example to make said at least one machine-readable marking fluoresce and/or phosphoresce.

In particular, the illumination device may have at least one semiconductor light source, for example at least one inorganic or organic light-emitting diode, in particular a one-dimensional or two-dimensional light-emitting diode array. Alternatively or in addition, at least one other type of light source may also be provided, for example at least one laser and/or at least one incandescent lamp and/or at least one gas discharge lamp.

The readout device may further comprise a plurality of receptacles. As described above, the receptacles can be selected in particular from the group consisting of: syringes; syringe bodies; ampoules; vials; bottles; screw-lid glass receptacles; snap-on lid glass receptacles; medical containers; pharmaceutical containers; foodstuff containers; in particular bottles and/or glass containers and/or cans. Other types of receptacles can also be used in principle, however.

Likewise as discussed above, the receptacles may each have at least one cylindrical lateral surface in particular, in particular a cylindrical lateral surface having a circular cross section and/or a circular cylindrical lateral surface. For example, the receptacles may be completely or partially rotationally symmetrical.

In a further aspect of the present invention, a filling device for filling a plurality of receptacles with at least one content is proposed. The filling device comprises at least one readout device according to one or more of the embodiments described above or yet to be described in further detail hereinafter. The filling device further comprises at least one filling station for introducing the content into the receptacles. For example, this filling station may comprise at least one metering device, by means of which specific quantities of at least one content can be introduced into each receptacle in a metered or controlled manner. For example, this metering device may comprise at least one metering nozzle and/or at least one filling nozzle, which can be introduced completely or partially into an interior of the receptacle so as to ensure that the receptacle is filled with the least one content without loss.

The readout device is arranged upstream or downstream of the least one filling station. The filling device is designed to read out machine-readable markings on the receptacles and, for example subsequently or beforehand, to supply the receptacles completely or partially to the filling station. In this case, results of the readout of the least one machine-readable marking can be taken into account during the supply process. For example, receptacles that are not intended and/or are not suitable for filling can be discharged before the filling process. Alternatively or in addition, receptacles that are to be filled differently can also be identified and sorted on the basis of the machine-readable markings on the receptacles, wherein these receptacles can then be filled differently in the filling station and/or supplied to different filling stations. Various embodiments are possible. If, for reasons of space, it is not possible to arrange the readout device upstream of the filling station, it is thus alternatively or additionally conceivable to arrange the readout device downstream of the filling station. However, filled receptacles are then generally discharged depending on the result of the readout process.

In a further aspect of the present invention, a packaging device for packaging a plurality of receptacles in at least one outer packaging is proposed. In this case, an outer packaging is generally to be understood to mean a packaging that simultaneously encloses a plurality of receptacles, that is to say two, three or more receptacles, either completely or partially. For example, the outer packaging may comprise at least one box, at least one bag, at least one tube, at least one plastic film, at least one blister pack or other types of outer packaging. Combinations of a number of types of outer packaging are also possible.

The packaging device has at least one readout device according to one or more of the embodiments described above or yet to be described in greater detail hereinafter. The packaging device further has at least one packaging station for introducing the receptacles into the outer packaging. For example, this packaging station may comprise at least one actuator, which is designed to grasp the receptacles and to introduce them into the outer packaging. Alternatively or in addition, the at least one actuator may also guide the receptacles into the outer packaging and/or place the outer packaging over a plurality of receptacles, for example such that the plurality of receptacles is encased by the outer packaging. Other embodiments are also conceivable.

The readout device is arranged upstream of the packaging station such that the receptacles pass the readout device before they reach the packaging station. The readout device is designed to first read out machine-readable markings on the receptacles and to then supply the receptacles completely or partially to the packaging station, where they are then to be introduced into the outer packaging. In this case, results of the readout process can again be considered during the packaging process. For example, receptacles that are unsuitable for packaging or are not intended for packaging can be discharged before the packaging process. Alternatively or in addition, the receptacles may also be sorted on the basis of the machine-readable markings that have been read out, for example such that specific receptacles are supplied to specific types of outer packagings and are packaged thereby. Other embodiments are also conceivable.

So as to identify unauthorized arrangements of products in the distribution chain, each individual receptacle or each packaging unit comprising the at least one receptacle can be marked by a unique marker, for example by a barcode. This unique marker, for example by means of a barcode, can be stored in at least one database for example and thus makes it possible to monitor the flow of goods by reading this marker on the packaging at branch points or junctions of the distribution chain and comparing it to the data in the database. So that the markers on the receptacles can be used for this application, they can be read out before the packaging process using a readout device as described herein and the markers can be correlated to the unique marker on the packaging in the database. By forming a packaging hierarchy of this type, individual receptacles can be traced along the distribution chain, although the markings thereof are covered by the respective packaging.

In a further aspect of the present invention, a use of a readout device according to one or more of the embodiments described above or yet to be described in greater detail hereinafter is proposed for a purpose selected from the group consisting of: mix-up protection when filling pharmaceutical or diagnostic containers; forgery protection for the identification of fake products; confusion protection when packaging a plurality of receptacles in at least one outer packaging. In this case mix-up protection is generally to be understood to mean protection against confusion, wherein the receptacles are filled with contents not intended for the filling process, that is to say for example incorrect contents and/or contents of incorrect dosage. Forgery protection is generally to be understood to mean a process in which it is identified whether or not a product contained in the receptacle and a content contained in the receptacle originates from a specific source or group of sources. For example, these sources may be one or more manufacturers and/or one or more merchants and/or one or more filling companies, which are authorized for manufacture and/or distribution and/or filling. Confusion protection is generally to be understood to mean protection against the receptacles being packaged in an outer packaging for which they are not intended or are not suitable.

In a further aspect of the present invention, a method for reading out machine-readable markings on at least one lateral surface of receptacles is proposed. The receptacles are rolled in succession over at least one roll area, and, in so doing, at least part of the lateral surface rolls within at least one viewing region of at least one optical detector. The machine-readable markings are detected in the viewing region by means of the optical detector. Reference can be made to the above description of the readout device for further possible embodiments of the method. Other embodiments are also possible in principle, however.

The machine-readable markings may comprise one-dimensional or two-dimensional barcodes in particular, for example according to one or more of the above-mentioned standards. In particular, the method can be carried out in such a way that a readout device according to one or more of the embodiments described above or yet to be described in greater detail hereinafter is used.

In a further aspect of the present invention, a method for filling a plurality of receptacles with at least one content is proposed. In this case, a plurality of receptacles is provided. At least one machine-readable marking of the receptacles is read out by means of a method according to one or more of the embodiments described above or according to one or more of the embodiments described hereinafter. The at least one content is then introduced into the receptacles. The method can be designed in particular in such a way that it is possible to identify on the basis of the machine-readable marking whether the receptacles are suitable for filling with the content, and wherein a receptacle is discharged if said receptacle is identified as being unsuitable. Alternatively or in addition, it is also possible to identify on the basis of the machine-readable marking the manner in which the receptacles are to be filled, for example the content and/or the quantity and/or the dosage with which the receptacles are to be filled. The receptacles can then be filled with the at least one content in accordance with this identification.

In a further aspect of the present invention, a method for packaging a plurality of receptacles in at least one outer packaging is proposed. In this case, the plurality of receptacles is provided. At least one machine-readable marking of the receptacles is read out by means of a method according to one or more of the embodiments described above or according to one or more of the embodiments described hereinafter of a method for reading out machine-readable markings. The receptacles are then introduced completely or partially into the outer packaging. In a preferred embodiment, it is possible to identify on the basis of the machine-readable marking whether the receptacles are intended to be introduced into the outer packaging. If a receptacle not intended for introduction is identified, said receptacle is preferably discharged. Alternatively or in addition however, the receptacles may also be divided on the basis of the machine-readable marking, such that specific receptacles are introduced into specific outer packagings. Various embodiments are possible. The proposed methods and devices have a large number of advantages compared to known methods and devices. In particular, the devices can also be implemented cost-effectively, easily and without a relatively large spatial requirement, even on an industrial scale. The machine-readable markings on the receptacles can be read out securely and reliably by means of a simple mechanism, which can ensure the rotation and transport of the receptacles in front of the optical detector. At the same time, it can be ensured in accordance with the invention that markings identified as being illegible by the optical detector can be ejected and/or otherwise selected. At the same time, the readout device can be implemented in an extremely space-saving manner and in particular can meet the requirements of industrial production without difficulty.

In particular, the devices and methods according to the invention can be used reliably with round receptacles, for example round glass receptacles. In principle, receptacles having an unround cross section are also possible however, since these can also roll over the roll area to a specific degree. The roll area may in particular be designed as a fixed area. The receptacle can be rotated and simultaneously moved forwards in the rolling direction by means of the rolling movement. For example, the at least one lateral surface, for example the glass surface, can be detected by means of a suitable optical detector, for example by means of a suitable camera and optionally at least one illumination unit. This lateral surface can thus be scanned for example and the machine-readable marking can be read out. In this case, optical information can be detected simultaneously within the viewing region, such that a simultaneous readout process may take place, which is preferable to a serial readout process, which is also possible in principle. The length of the viewing region, for example of the viewing field of the camera, preferably corresponds to at least the circumference of the receptacle.

The roll area may be designed in particular as a fixed area, which is stationary in a coordinate system of the readout device. For example, the roll area may accordingly be used as a spatially fixed reference area, along which the receptacle can be rolled in an undefined manner. The at least one optical detector may likewise be stationary for example in relation to the coordinate system of the readout device. The transport device may comprise, for example, at least one element moved relative to this coordinate system however, for example at least one actuator, which triggers the rolling process.

As described above, arrangements in which the roll area is arranged fixedly in space as well as arrangements in which the roll area is moved completely or partially are conceivable. It is generally advantageous for correct functioning of the readout device if the actuator moves at a different speed relative to the roll area, that is to say if there is a difference in speed and thus a relative movement. In this case, the receptacles generally move at half the speed difference between the actuator, for example the conveyor band and or conveyor belt, and roll area.

To summarize, the following embodiments are particularly preferred within the scope of the present invention:
Embodiment 1: Readout device for reading out machine-readable markings on at least one lateral surface of receptacles, wherein the readout device has at least one optical detector with at least one viewing region, wherein the optical detector is designed to detect the machine-readable markings in the viewing region, wherein the readout device further has at least one roll area and at least one transport device, wherein the readout device is designed, by means of the transport device, to roll the receptacles in succession over the roll area and, in so doing, to roll at least part of the lateral surface within the viewing region.
Embodiment 2: Readout Device according to the preceding embodiment, wherein the optical detector comprises a camera, wherein the viewing region covers a solid angle detectable by the camera.
Embodiment 3: Readout device according to one of the preceding embodiments, wherein the viewing region and the roll area are dimensioned in such a way that the receptacles are rolled at least once along their entire circumference within the viewing region.
Embodiment 4: Readout Device according to one of the preceding embodiments, wherein the roll area is selected from the group consisting of: a flat roll area, in particular a flat roll area transverse to the direction of movement; a straight or flat roll area in the direction of movement; a convexly or concavely curved roll area.
Embodiment 5: Readout device according to one of the preceding embodiments, wherein the transport device comprises at least one band conveyor, in particular at least one conveyor belt, wherein the band conveyor moves at a distance from the roll area, wherein the receptacles can be arranged between the band conveyor and the roll area, and wherein the band conveyor is designed to move relative to the roll area and to roll the receptacles over the roll area.
Embodiment 6: Readout device according to one of the preceding embodiments, wherein the roll area is fixed, either in full or in part.
Embodiment 7: Readout device according to one of the preceding embodiments, wherein the roll area is designed as a movable roll area, either in full or in part.
Embodiment 8: Embodiment according to the preceding embodiment, wherein the readout device is designed to move the roll area differently in at least two different operating phases.
Embodiment 9: Embodiment according to the preceding embodiment, wherein the readout device is designed to move the roll area in full or in part in a direction of movement of the receptacle in at least one transport phase.
Embodiment 10: Embodiment according to the preceding embodiment, wherein the readout device is designed to move the roll area in full or in part at the same speed as the transport device in the transport phase.
Embodiment 11: Embodiment according to one of the three preceding embodiments, wherein the readout device is designed to move the roll area in full or in part at a speed different from the speed of the transport device in at least one readout phase
Embodiment 12: Embodiment according to the preceding embodiment, wherein the readout device is designed to move the roll area against a direction of movement of the transport device and/or against a direction of transport of the receptacle in the readout phase.
Embodiment 13: Embodiment according to the preceding embodiment, wherein the readout device is designed to roll the receptacle in a stationary manner in the readout phase.
Embodiment 14: Readout device according to one of the preceding embodiments, wherein the readout device further has a supply station, wherein the supply station is designed to supply the receptacles in succession to the roll area.
Embodiment 15: Readout device according to the preceding embodiment, wherein the supply station has at least one element selected from the group consisting of: a gearwheel; a conveying wheel having a plurality of seats over the circumference for the receptacles; a supply shaft; a magazine for receiving a plurality of receptacles; at least one slide rail for supplying the receptacles.
Embodiment 16: Readout device according to one of the two preceding embodiments, wherein the supply station has a conveying device, of which the speed of conveyance is slower than that of the readout device, whereby individualisation of the receptacles is ensured.
Embodiment 17: Readout device according to the preceding embodiment, wherein the conveying device of the supply station has two conveyor belts running in parallel.
Embodiment 18: Readout device according to one of the four preceding embodiments, wherein the supply station is designed to align the receptacles before and/or during the supply process.
Embodiment 19: Readout device according to one of the five preceding embodiments, wherein the supply station is designed to individualize the receptacles before and/or during the supply process.
Embodiment 20: Readout device according to one of the preceding embodiments, further comprising at least one control, wherein the control is connected to the optical detector, and wherein the control is designed to evaluate at least one piece of information, provided by the optical detector, concerning the machine-readable markings.
Embodiment 21: Readout device according to the preceding embodiment, wherein the control comprises at least one data processing device.
Embodiment 22: Readout device according to one of the two preceding embodiments, wherein the control is designed to read out and/or evaluate at least one barcode contained in the machine-readable markings and/or quality data thereof.
Embodiment 23: Readout device according to one of the preceding embodiments, wherein the readout device further has at least one selecting device, wherein the readout device is designed to sort the receptacles by means of the selecting device in accordance with a result of the readout of the machine-readable markings.
Embodiment 24: Readout device according to the preceding embodiment, wherein the selecting device comprises at least one device for discharging receptacles.
Embodiment 25: Readout device according to one of the two preceding embodiments, wherein the selecting device comprises at least one element selected from the group consisting of: an adjustable switch point; an ejection flap, in particular an ejection flap in the roll area, an actuator for selectively influencing a path of movement of individual receptacles; a compressed air control.
Embodiment 26: Readout device according to one of the three preceding embodiments, wherein the selecting device is connected to at least one control of the readout device, wherein the selecting device can be influenced by the control.
Embodiment 27: Readout device according to one of the preceding embodiments, wherein the readout device further has at least one illumination device, wherein the illumination device is designed to illuminate at least part of the viewing region.
Embodiment 28: Readout device according to one of the preceding embodiments, further comprising a plurality of receptacles.
Embodiment 29: Readout device according to the preceding embodiment, wherein the receptacles are selected from the group consisting of: syringes; syringe bodies; ampoules; vials; bottles; plastic bottles, in particular plastic bottles having a screw closure; screw-lid glass receptacles; snap-on lid glass receptacles; medical containers; pharmaceutical containers; canisters; cans; foodstuff containers.
Embodiment 30: Readout device according to one of the two preceding embodiments, wherein the receptacles each have at least one cylindrical lateral surface, in particular a cylindrical lateral surface with a circular cross-section.
Embodiment 31: Filling device for filling a plurality of receptacles with at least one content, wherein the filling device has at least one readout device according to one of the preceding embodiments, wherein the filling device further has at least one filling station for introducing the content into the receptacles, wherein the readout device is arranged upstream or downstream of the filling station, and wherein the filling device is designed to read out machine-readable markings on the receptacles and to supply the receptacles completely or partially to the filling station.
Embodiment 32: Packaging device for packaging a plurality of receptacles in at least one outer packaging, wherein the packaging device has at least one readout device according to one of the preceding embodiments relating to a readout device, wherein the packaging device further has at least one packaging station for introducing the receptacles into the outer packaging, wherein the readout device is arranged upstream of the packaging station, and wherein the packaging device is designed to first read machine-readable markings on the receptacles and to then supply the receptacles completely or partially to the packaging station.
Embodiment 33: Use of a readout device according to one of the preceding embodiments relating to a readout device for a purpose selected from the group consisting of: mix-up protection when filling pharmaceutical or diagnostic containers; forgery protection for the identification of fake products; confusion protection when packaging a plurality of receptacles in at least one outer packaging; formation of a packaging hierarchy for tracking containers through sales channels.
Embodiment 34: Method for reading out machine-readable markings on at least one lateral surface of receptacles, wherein the receptacles are rolled in succession over at least one roll area, and, in so doing, at least part of the lateral surface is rolled within at least one viewing region of at least one optical detector, wherein the machine-readable markings in the viewing region are detected by means of the optical detector.
Embodiment 35: Method according to the preceding embodiment, wherein the machine-readable markings are selected from the group consisting of: one-dimensional barcodes; two-dimensional barcodes; machine-readable text.
Embodiment 36: Method according to one of the two preceding embodiments, wherein a readout device according to one of the preceding embodiments relating to a readout device is used.
Embodiment 37: Method for filling a plurality of receptacles with at least one content, wherein the plurality of receptacles is provided, wherein at least one machine-readable marking of the receptacles is read out by means of a method according to one of the preceding embodiments relating to a method for reading out machine-readable markings, wherein the at least one content is then introduced into the receptacles.
Embodiment 38: Method according to the preceding embodiment, wherein it is possible to identify on the basis of the machine-readable marking whether the receptacles are suitable for filling with the content, and wherein, if a receptacle is identified as being unsuitable, said receptacle is discharged.
Embodiment 39: Method for packaging a plurality of receptacles in at least one outer packaging, wherein the plurality of receptacles is provided, wherein at least one machine-readable marking of the receptacles is read out by means of the method according to one of the preceding embodiments relating to a method for reading out machine-readable markings on at least one lateral surface of receptacles, wherein the receptacles are then completely or partially introduced into the outer packaging.
Embodiment 40: Method according to the preceding embodiment, wherein it is possible to identify on the basis of the machine-readable marking whether the receptacles are intended for introduction into the outer packaging, and wherein, if a receptacle is identified as not being intended for introduction, said receptacle is discharged.

### Brief Description of the Figures

Further details and features of the invention will emerge from the following description of preferred exemplary embodiments, in particular in conjunction with the dependent claims. In this case, the respective features can be implemented individually or in combination with one another. The invention is not limited to the exemplary embodiments. The exemplary embodiments are illustrated schematically in the figures. In this case, equal reference numerals in the individual figures denote equal elements or functionally equal elements, or elements that correspond to one another in terms of their functions.

In the figures:
- Figure 1: shows a plan view of an exemplary embodiment of a readout device according to the invention as well as a filling device and a packaging device;
- Figure 2: shows a side view of the exemplary embodiment according to Figure 1;
- Figure 3: shows an exemplary embodiment of a readout device according to the invention with a multi-part roll area; and
- Figures 4A and 4B: show an exemplary embodiment of a readout device according to the invention with moved roll area in different operational phases.

### Exemplary Embodiments

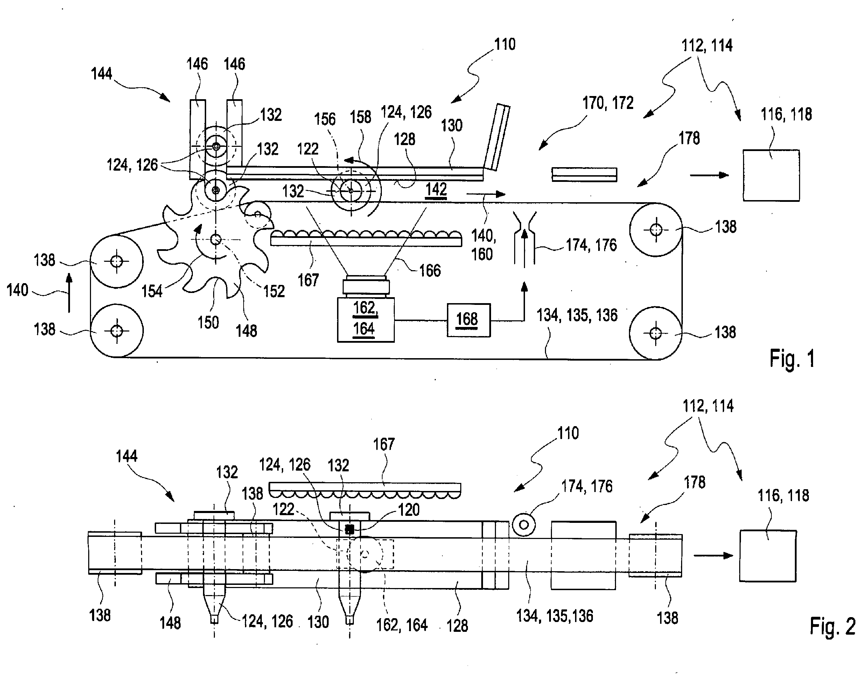

An exemplary embodiment of a readout device 110 according to the invention is illustrated in Figures 1 and 2. At the same time, these illustrations symbolically show exemplary embodiments of a filling device 112 according to the invention or a packaging device 114 according to the invention. Whereas, besides the readout device 110, the filling device 112 comprises a filling station 116 indicated merely symbolically in Figures 1 and 2 and arranged downstream of the readout device 110, the packaging device 114 comprises at least one packaging station 118 arranged downstream of the readout device 110. Both stations 116, 118 are illustrated merely symbolically in Figures 1 and 2. These stations 116, 118, can be designed in a manner that is conventional, for example commercially conventional, to a person skilled in the art.

The readout device 110, which is illustrated in plan view in Figure 1 and in side view in Figure 2, is designed to read out machine-readable markings 120 (see Figure 2 in particular), for example barcodes and in particular two-dimensional barcodes, on a lateral surface 122 of receptacles 124. In the exemplary embodiment illustrated, the receptacles 124 are syringe bodies 126 by way of example. A large number of other receptacles may also be used however, either alternatively or in addition.

The readout device 110 comprises a roll area 128, over which the syringe body 126 can be rolled with its cylindrical lateral surface 122. The roll area 128 is preferably flat and, for example, may be a surface of a plate 130 facing the injection body 126. For example, the lateral surface 122 of the injection body 126 may roll over this roll area 128, whereas a finger rest 132 and/or other regions of the receptacles 124 may be arranged outside this roll area 128.

The readout device 110 further comprises a transport device 134, which is designed for example as a band conveyor 135 and/or as a conveyor belt 136. This transport device 134 is preferably designed in a band-shaped or ribbon-shaped manner in the illustrated exemplary embodiment, for example as an endless band, which is guided over deflection rolls 138. One or more of these deflection rolls 138 may be driven for example by connection to a corresponding motor, such that the conveyor belt 136 is driven in a direction of movement 140. The transport device 134 is arranged in the region of the roll area 128 at a distance from the roll area 128, such that a gap 142 forms between the conveyor belt 136 and the roll area 128. In the illustrated exemplary embodiment, receptacles 124 are introduced sequentially into this gap by means of a supply station 144. In the illustrated exemplary embodiment, the supply station comprises slide rails 146 by way of example and a conveying wheel 148 having seats 150 over the circumference for the receptacles 124. The conveying wheel 148 rotates about an axis 152 in a direction of rotation 154, such that receptacles 124 from the slide rails 146 are received individualized in the seats 150 and are supplied to the gap 142. In the gap 142, the conveyor belt 136 presses the receptacles 124 against the roll area 128 and rolls these receptacles over the roll area 128. In so doing, the receptacles 124 rotate about their axis 156 in a direction of rotation 158 and, at the same time, move in a direction of movement 160, to the right in Figure 1.

The readout device 110 further comprises at least one optical detector 162, in particular at least one camera 164. The readout device 110 may further have at least one illumination device 167. This illumination device 167 is illustrated merely schematically in Figures 1 and 2. For example, the illumination device may in this case be a line of light-emitting diodes, which illuminate completely or partially the viewing region 166 of the optical detector 162. In particular, illumination may be provided at an incline from above or from the front.

The optical detector 164 has a viewing region 166, for example a solid angle region, which is covered by the camera 164. During the movement of the receptacles 124 in the direction of movement 160 when rolling over the roll area 128, the lateral surface 122 of these receptacles 124 moves through this viewing region 166. The viewing region 166 is preferably dimensioned in such a way that the receptacle 124 is rolled at least once along its entire circumference within the viewing region 166. The machine-readable marking 120 of each receptacle 124 accordingly preferably moves at least once through the viewing region 166 and, in so doing, can be detected by the optical detector 162. The readout device 110 may have at least one control 168 for example, which can also be integrated in full or in part into the camera 164 and by means of which an optical barcode, which is contained in the machine-readable marking 120, can be read out. Alternatively or in addition, the control 168 may also be designed to determine quality data (grades) of the machine-readable marking 120, in particular of a code contained therein. The control 168 is preferably connected to the optical detector 162.

As is likewise illustrated in Figures 1 and 2, the readout device 110 may further have at least one selecting device 170. In the illustrated exemplary embodiment, the selecting device may have an ejection flap 172 in particular. For example, specific receptacles 124 can be removed selectively from the method by means of this selecting device, for example if it is identified on the basis of the information of the machine-readable markings 120 that these receptacles are unsuitable or undesired, or if no machine-readable marking 120 can be identified on the respective receptacle 124. Other embodiments are also possible, for example in which the selecting device 170 sorts the receptacles 124 into more than two groups. As illustrated in Figure 1, the selecting device 170 may further comprise at least one actuator 174, for example at least one compressed air control 176. The compressed air control 176 may comprise one or more compressed air nozzles for example, which for example ensure that selected receptacles 124 are ejected with increased likelihood. As indicated in Figure 1, the selecting device 170 may for example be influenced by the control 168, for example in accordance with a piece of information concerning the receptacle 124 detected during the readout process within the viewing region 166.

As likewise illustrated, the evaluation device shown in Figures 1 and 2 may be arranged, for example, as a component of the filling device 112 and/or as a component of the packaging device 114, and/or may be arranged upstream of at least one filling station 116 and/or at least one packaging station 118, respectively. Once the machine-readable markings 120 have been read out, the receptacles 120 can then be supplied to the stations 116 and 118. For example, the receptacles 124 may be glass bodies for disposable syringes. These can be supplied via the slide rails 146 to the readout device 110, and from there in particular to the gap 142 or the roll area 128. In the supply station 144, the receptacles 124, in particular the syringe bodies 126, can be individualized and precisely aligned by means of the conveying wheel 148, which may also be designed for example as a gearwheel. For this purpose, the seats 150 may be provided, which can predefine a defined alignment of receptacles 124. By turning the conveying wheel 148, the receptacles 124 can be transferred to the gap 142 and/or the transport device. By means of the transport device 134, in particular the conveyor belt 136, the receptacles 124 are then rolled along the roll area 128 in such a way that the lateral surface 122 with the machine-readable marking 120 can be examined by the optical detector 162. If it is established, for example by means of the optical detector 162, in particular the camera 164, that the machine-readable marking 120 is absent and/or cannot be read, the ejection flap 172 in particular can thus be opened and the corresponding receptacle 124 can be discharged, in particular ejected. If the machine-readable marking 120 corresponds to the specifications, the receptacle 124 is thus preferably transported further to an output 178, for example an ejector, and/or is transferred to one or more of the stations 116, 118. For the transfer to one or more of the stations 116, 118 and/or for a further use, the receptacles 124 at the output 178 can be transferred for example to a transport device, not illustrated in Figures 1 and 2, for example a conventional conveying device.

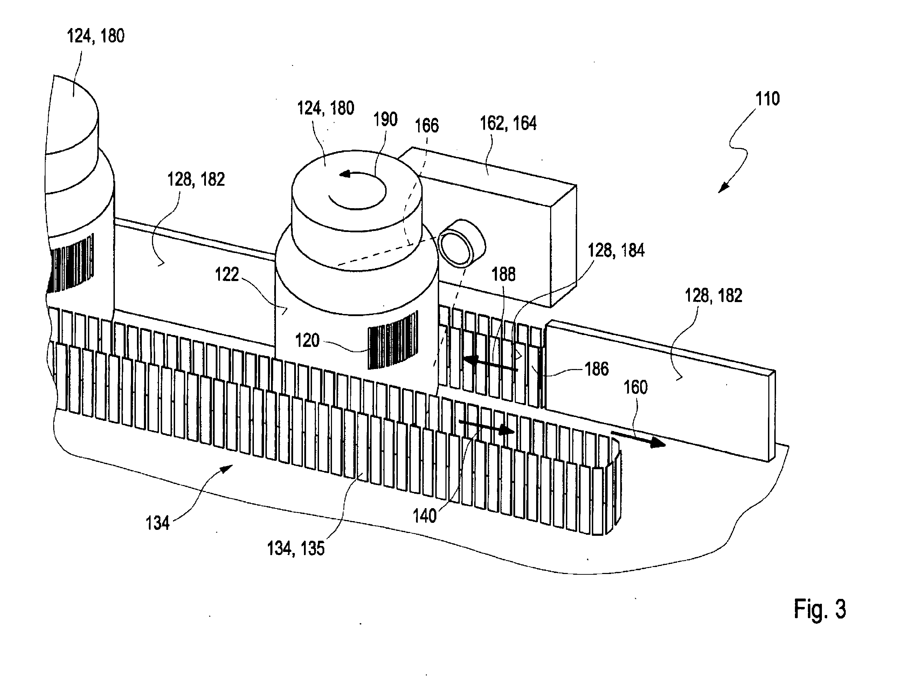

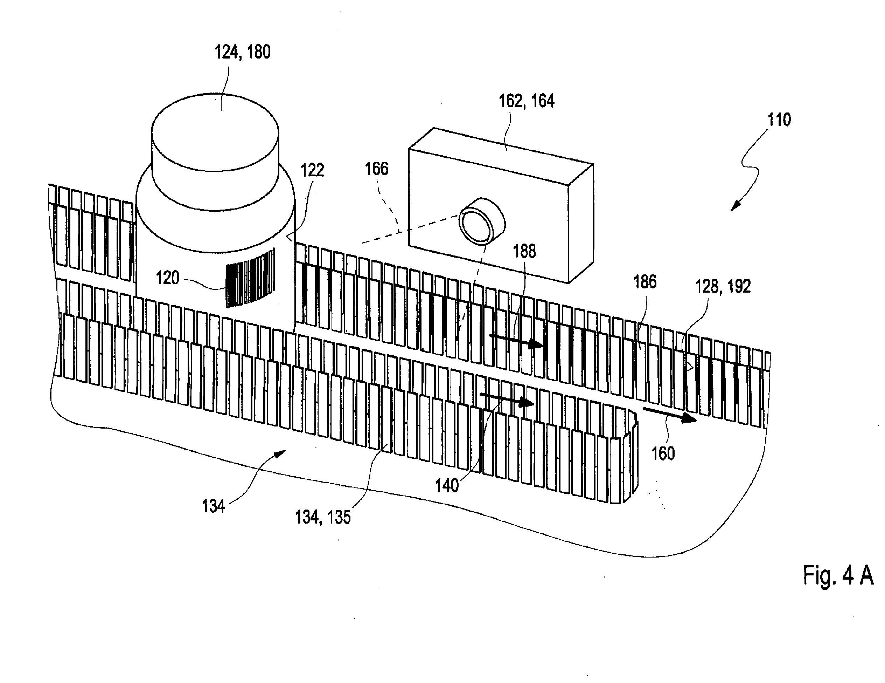

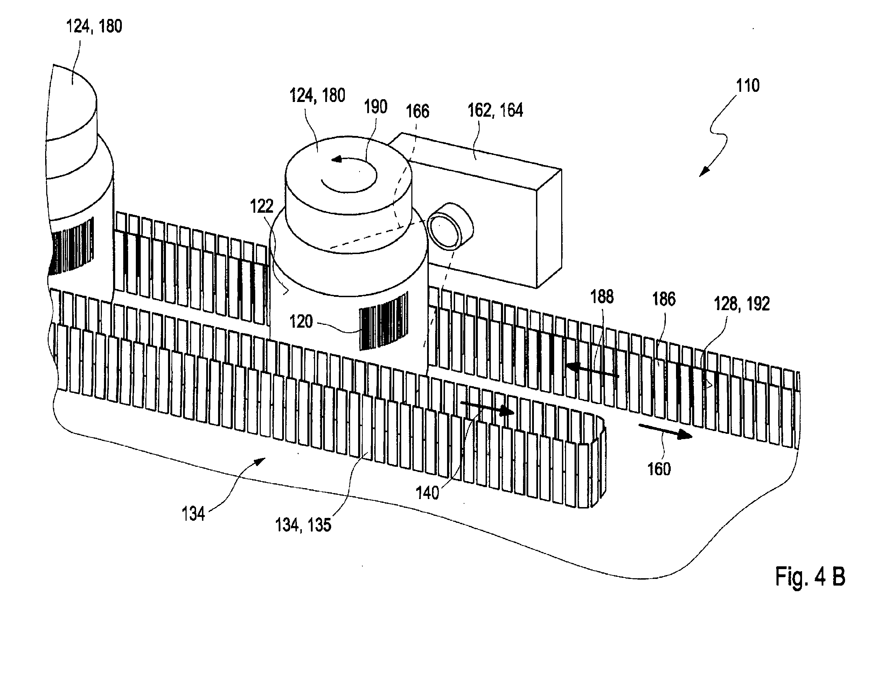

In Figures 1 and 2 the roll area 128 is fixed with respect to a coordinate system of the readout device 110. Embodiments with a completely or partially movable roll area 128 are also conceivable however. Exemplary embodiments of this type are illustrated in Figures 3 and 4A and 4B.

Figure 3 thus shows an exemplary embodiment, in which a transport device 134 is again provided with a band conveyor 135. Reference can be made by way of example to the above description of Figures 1 and 2 for large parts of this exemplary embodiment and for further optional embodiments. For example, the band conveyor 135 may be designed in the form of a segmented band conveyor or a link chain, as illustrated in Figure 3. Other embodiments, for example again embodiments with a continuous conveyor belt 136, are also possible however in this exemplary embodiment or in other exemplary embodiments. The band conveyor 135 moves in a direction of movement 140, which is also a direction of movement 160 of receptacles 124. The receptacles 124 are formed by way of example in this exemplary embodiment as screw-lid glass receptacles 180, for example in the form of bottles. Other embodiments are also again possible in principle, however.

The receptacles 124 again have a lateral surface 122 with one or more machine-readable markings 120. The readout device 110 in turn again has an optical detector 162 in the form of a camera 164 for example with a viewing region 166 indicated symbolically in Figure 3.

A roll area 128 is again provided, which, in contrast to the embodiment according to Figures 1 and 2 however, is designed in a number of parts and has fixed portions 182 and at least one movable portion 184. The movable portion 184 may again be formed by a band conveyor 186 for example or a surface of this band conveyor 186, which faces the receptacles 124.

If a receptacle 124 is located within the viewing region 166 of the optical detector 162, the movable portion 184 can thus move in a direction of movement 188. In this case, said movable portion preferably moves against the direction of movement 160 of the receptacles 124. For example, the movable portion 184 can move in the opposite direction to, but at the same speed as, the band conveyor 135 of the transport device 134. The receptacle 124 located within the viewing region 166 rolls accordingly, as denoted symbolically in Figure 3 by reference numeral 190. The receptacle 124 thus rolls within the viewing range 166, but preferably remains stationary in relation to a coordinate axis parallel to the direction of movement 160.

The movable portion 184 can be moved differently in different operating phases. For example it may thus be stationary when the receptacle 124 is to be conveyed, that is to say for example in a transport phase. If one of the receptacles 124 is then located within the viewing range 166, a readout phase can thus be started, and a movement of the movable portion 184 can be started. The respective receptacle 124 within the viewing range 166 can then be rolled, and the machine-readable marking 120 can be read out by means of the optical detector 162.

A modification of the exemplary embodiment of a readout device 110 according to the invention in accordance with Figure 3 is shown in Figures 4A and 4B. Reference can again be made to the above description for large parts of this exemplary embodiment.

In this exemplary embodiment, a roll area 128 is again provided, which is designed completely as a movable roll area 192 in this exemplary embodiment. For example, the movable roll area 192 may again be a surface of a band conveyor 186 facing the receptacle 124, wherein the receptacle 124 is arranged between the band conveyors 135 and 186.

In the exemplary embodiment shown in Figures 4A and 4B, the readout device 110 is designed to carry out at least two operating phases. A transport phase is thus illustrated in Figure 4A, in which the band conveyors 135 and 186 move in the same direction, such that the directions of movement 140 and 188 are identical. The band conveyors 135 and 186 preferably move at the same speed. Receptacles 124 between the band conveyors 135 and 186 then preferably do not rotate. For example, the transport phase then may be carried out when no receptacle 124 is located within the viewing region 166.

A readout phase is illustrated in Figure 4B. The readout phase is then preferably carried out when a receptacle 124 is located within the viewing region 166. In this readout phase, the band conveyor 186 of the movable roll area 192 then moves at a different speed from the band conveyor 135 of the transport device 134. For example, a direction reversal may occur, such that the direction of movement 188 of the band conveyor 186 is directed opposite the direction of movement 140 of the band conveyor 135. The band conveyors 135 and 186 preferably move at the same speed however, but in opposite directions. As a result of this opposed movement, the receptacle 124 or the receptacles 124, which is/are located between the band conveyors 135, 186, are made to roll 190. The receptacle 124 located within the viewing region 166 is then read out by the optical detector 162, and the machine-readable marking 120 is detected.

The at least one transport phase and the at least one readout phase may be carried out repeatedly and/or alternately. For example, it is thus possible to identify by means of a sensor and/or by means of the optical detector 162 itself whether a receptacle 124 is located within the viewing region 166. For example, the transport phase may be carried out until it is identified that a receptacle 124 is located within the viewing region 166. A changeover can then be implemented in a readout phase, for example by reversing the direction of the band conveyor 186.

An advantage of the embodiments according to Figures 3, 4A and 4B is, in particular, that extended machine-readable markings 120 can be detected and/or that large receptacles 124 can be read out, in spite of a small viewing region 166, without having to extend the readout device 110. These embodiments with a movable roll area 192 are therefore advantageous in particular for receptacles 124 of large diameter, for example bottles and/or screw-lid glass receptacles 180.

### List of Reference Signs

- 110: readout device
- 112: filling device
- 114: packaging device
- 116: filling station
- 118: packaging station
- 120: machine-readable markings
- 122: lateral surface
- 124: receptacle
- 126: syringe body
- 128: roll area
- 130: plate
- 132: finger rest
- 134: transport device
- 135: band conveyor
- 136: conveyor belt
- 138: deflection rolls
- 140: direction of movement
- 142: gap
- 144: supply station
- 146: slide rails
- 148: conveying wheel
- 150: seats
- 152: axis
- 154: direction of rotation
- 156: axis
- 158: direction of rotation
- 160: direction of movement of the receptacles
- 162: optical detector
- 164: camera
- 166: viewing region
- 167: illumination device
- 168: control
- 170: selecting device
- 172: ejection flap
- 174: actuator
- 176: compressed air control
- 178: output
- 180: screw-lid glass receptacle
- 182: fixed portions
- 184: movable portion
- 186: band conveyor
- 188: direction of movement
- 190: rolling motion
- 192: movable roll area

## Claims

1. Readout device (110) for reading out machine-readable markings (120) on at least one lateral surface (122) of receptacles (124), wherein the readout device (110) has at least one optical detector (162) with at least one viewing region (166), wherein the optical detector (162) is designed to detect the machine-readable markings (120) in the viewing region (166), wherein the readout device (110) further has at least one roll area (128) and at least one transport device (134), wherein the readout device (110) is designed to roll the receptacles (124) in succession over the roll area (128) by means of the transport device (134) and, in so doing, to roll at least part of the lateral surface (122) within the viewing region (166), wherein the transport device (134) comprises at least one band conveyor (135), **characterized in that** the band conveyor moves (135) at a distance from the roll area (128), wherein the receptacles (124) can be arranged between the band conveyor (135) and the roll area (128), and wherein the band conveyor (135) is designed to move relative to the roll area (128) and to roll the receptacles (124) over the roll area (128).

2. Readout device (110) according to the preceding claim, wherein the optical detector (162) comprises a camera (164), wherein the viewing region (166) covers a solid angle detectable by the camera (164).

3. Readout device (110) according to one of the preceding claims, wherein the viewing region (166) and the roll area (128) are dimensioned in such a way that the receptacles (124) are rolled at least once along their entire circumference within the viewing region (166).

4. Readout device (110) according to one of the preceding claims, wherein the roll area (128) is designed at least in part as a movable roll area (128, 192).

5. Readout device (110) according to the preceding claim, wherein the readout device (110) is designed to move the movable roll area (128, 192) differently in at least two different operating phases.

6. Readout device (110) according to any of the two preceding claims, wherein the movable roll area (128, 192) has at least one movable portion (184) which is formed by a second band conveyor (186) or by a surface of a second band conveyor (186), which faces the receptacles (124), or wherein the movable roll area (128, 192) is the surface of a second band conveyor (186) facing the receptacles (124).

7. Readout device (110) according to one of the preceding claims, wherein the readout device (110) further has a supply station (144), wherein the supply station (144) is designed to supply the receptacles (124) in succession to the roll area (128).

8. Readout device (110) according to the preceding claim, wherein the supply station (144) is designed to align and/or to individualize the receptacles (124) before and/or during the supply process.

9. Readout device (110) according to one of the preceding claims, further comprising at least one control (168), wherein the control (168) is connected to the optical detector (162), and wherein the control (168) is designed to evaluate at least one piece of information concerning the machine-readable markings (120), provided by the optical detector (162).

10. Readout device (110) according to one of the preceding claims, wherein the readout device (110) further has at least one selecting device (170), wherein the readout device (110) is designed to sort the receptacles (124) by means of the selecting device (170) in accordance with a result of the readout of the machine-readable markings (120).

11. Readout device (110) according to one of the preceding claims, wherein the readout device (110) further has at least one illumination device (167), wherein the illumination device (167) is designed to illuminate at least part of the viewing region (166).

12. Filling device (112) for filling a plurality of receptacles (124) with at least one content, wherein the filling device (112) has at least one readout device (110) according to one of the preceding claims, wherein the filling device (112) further has at least one filling station (116) for introducing the content into the receptacles (124), wherein the readout device (110) is arranged upstream or downstream of the filling station (116), and wherein the filling device (112) is designed to read out machine-readable markings (120) on the receptacles (124) and to supply the receptacles (124) completely or partially to the filling station (116).

13. Packaging device (114) for packaging a plurality of receptacles (124) in at least one outer packaging, wherein the packaging device (114) has at least one readout device (110) according to one of claims 1-11 relating to a readout device (110), wherein the packaging device (114) further has at least one packaging station (118) for introducing the receptacles (124) into the outer packaging, wherein the readout device (110) is arranged upstream of the packaging station (118), and wherein the packaging device (114) is designed to first read out machine-readable markings (120) on the receptacles (124) and to then supply the receptacles (124) completely or partially to the packaging station (118).

14. Use of a readout device (110) according to one of claims 1-11 relating to a readout device (110) for a purpose selected from the group consisting of: mix-up protection when filling pharmaceutical or diagnostic containers; forgery protection for the identification of fake products; confusion protection when packaging a plurality of receptacles (124) in at least one outer packaging; formation of a packaging hierarchy for tracking containers through sales channels.

15. Method for reading out machine-readable markings (120) on at least one lateral surface (122) of receptacles (124), wherein the receptacles (124) are rolled in succession over at least one roll area (128), and, in so doing, at least part of the lateral surface (122) is rolled within at least one viewing region (166) of at least one optical detector (162), wherein the machine-readable markings (120) in the viewing region (166) are detected by means of the optical detector (162), wherein at least one readout device (110) according to one of claims 1-11 relating to a readout device (110) is used for reading out the machine-readable markings (120) on the at least one lateral surface (122) of the receptacles (124).

16. Method for filling a plurality of receptacles (124) with at least one content, wherein the plurality of receptacles (124) is provided, wherein at least one machine-readable marking (120) of the receptacles (124) is read out by means of a method according to claim 15, wherein the at least one content is then introduced into the receptacles (124).

17. Method for packaging a plurality of receptacles (124) in at least one outer packaging, wherein the plurality of receptacles (124) is provided, wherein at least one machine-readable marking (120) of the receptacles (124) is read out by means of a method claim 15 relating to a method for reading out machine-readable markings (120) on at least one lateral surface (122) of receptacles (124), wherein the receptacles (124) are then introduced completely or partially into the outer packaging.

## Patentansprüche

1. Auslesevorrichtung (110) zum Auslesen maschinenlesbarer Markierungen (120) auf mindestens einer Mantelfläche (122) von Gefäßen (124), wobei die Auslesevorrichtung (110) mindestens einen optischen Detektor (162) mit mindestens einem Sichtbereich (166) aufweist, wobei der optische Detektor (162) eingerichtet ist, um die maschinenlesbaren Markierungen (120) in dem Sichtbereich (166) zu erfassen, wobei die Auslesevorrichtung (110) weiterhin mindestens eine Rollfläche (128) und mindestens eine Transportvorrichtung (134) aufweist, wobei die Auslesevorrichtung (110) eingerichtet ist, um mittels der Transportvorrichtung (134) die Gefäße (124) nacheinander auf der Rollfläche (128) abzurollen und dabei zumindest einen Teil der Mantelfläche (122) innerhalb des Sichtbereichs (166) abzurollen, wobei die Transportvorrichtung (134) mindestens ein Förderband (135) umfasst, **dadurch gekennzeichnet, dass** das Förderband (135) sich von der Rollfläche (128) beabstandet bewegt, wobei die Gefäße (124) zwischen dem Förderband (135) und der Rollfläche (128) angeordnet werden können und wobei das Förderband (135) eingerichtet ist, um sich relativ zu der Rollfläche (128) zu bewegen und die Gefäße (124) auf der Rollfläche (128) abzurollen.

2. Auslesevorrichtung (110) nach dem vorhergehenden Anspruch, wobei der optische Detektor (162) eine Kamera (164) umfasst, wobei der Sichtbereich (166) einen von der Kamera (164) erfassbaren Raumwinkel umfasst.

3. Auslesevorrichtung (110) nach einem der vorhergehenden Ansprüche, wobei der Sichtbereich (166) und die Rollfläche (128) derart dimensioniert sind, dass die Gefäße (124) mindestens einmal entlang ihres gesamten Umfangs innerhalb des Sichtbereichs (166) abgerollt werden.

4. Auslesevorrichtung (110) nach einem der vorhergehenden Ansprüche, wobei die Rollfläche (128) zumindest teilweise als bewegliche Rollfläche (128, 192) ausgestaltet ist.

5. Auslesevorrichtung (110) nach dem vorhergehenden Anspruch, wobei die Auslesevorrichtung (110) eingerichtet ist, um die bewegliche Rollfläche (128, 192) in mindestens zwei unterschiedlichen Betriebsphasen unterschiedlich zu bewegen.

6. Auslesevorrichtung (110) nach einem der zwei vorhergehenden Ansprüche, wobei die bewegliche Rollfläche (128, 192) mindestens einen beweglichen Abschnitt (148) aufweist, der durch ein zweites Förderband (186) oder durch eine Oberfläche eines zweiten Förderbands (186) ausgebildet ist, das bzw. die den Gefäßen (124) zugewandt ist, oder wobei die bewegliche Rollfläche (128, 192) die Oberfläche eines den Gefäßen (124) zugewandten zweiten Förderbands (186) ist.

7. Auslesevorrichtung (110) nach einem der vorhergehenden Ansprüche, wobei die Auslesevorrichtung (110) weiterhin eine Zuführstation (144) aufweist, wobei die Zuführstation (144) eingerichtet ist, um die Gefäße (124) nacheinander der Rollfläche (128) zuzuführen.

8. Auslesevorrichtung (110) nach dem vorhergehenden Anspruch, wobei die Zuführstation (144) eingerichtet ist, um die Gefäße (124) vor und/oder während des Zuführens auszurichten und/oder zu vereinzeln.

9. Auslesevorrichtung (110) nach einem der vorhergehenden Ansprüche, weiterhin umfassend mindestens eine Steuerung (168), wobei die Steuerung (168) mit dem optischen Detektor (162) verbunden ist und wobei die Steuerung (168) eingerichtet ist, um mindestens eine von dem optischen Detektor (162) bereitgestellte Information über die maschinenlesbaren Markierungen (120) auszuwerten.

10. Auslesevorrichtung (110) nach einem der vorhergehenden Ansprüche, wobei die Auslesevorrichtung (110) weiterhin mindestens eine Selektiervorrichtung (170) aufweist, wobei die Auslesevorrichtung (110) eingerichtet ist, um mittels der Selektiervorrichtung (170) entsprechend einem Ergebnis des Auslesens der maschinenlesbaren Markierungen (120) eine Sortierung der Gefäße (124) durchzuführen.

11. Auslesevorrichtung (110) nach einem der vorhergehenden Ansprüche, wobei die Auslesevorrichtung (110) weiterhin mindestens eine Beleuchtungsvorrichtung (167) aufweist, wobei die Beleuchtungsvorrichtung (167) eingerichtet ist, um zumindest einen Teil des Sichtbereichs (166) auszuleuchten.

12. Füllvorrichtung (112) zum Befüllen einer Mehrzahl von Gefäßen (124) mit mindestens einem Inhaltsstoff, wobei die Füllvorrichtung (112) mindestens eine Auslesevorrichtung (110) nach einem der vorhergehenden Ansprüche aufweist, wobei die Füllvorrichtung (112) weiterhin mindestens eine Füllstation (116) zum Einbringen des Inhaltsstoffs in die Gefäße (124) aufweist, wobei die Auslesevorrichtung (110) der Füllstation (116) vorgelagert oder nachgelagert ist und wobei die Füllvorrichtung (112) eingerichtet ist, um maschinenlesbare Markierungen (120) auf den Gefäßen (124) auszulesen und die Gefäße (124) vollständig oder teilweise der Füllstation (116) zuzuführen.

13. Verpackungsvorrichtung (114) zum Verpacken einer Mehrzahl von Gefäßen (124) in mindestens eine Umverpackung, wobei die Verpackungsvorrichtung (114) mindestens eine Auslesevorrichtung (110) nach einem der eine Auslesevorrichtung (110) betreffenden Ansprüche 1-11 aufweist, wobei die Verpackungsvorrichtung (114) weiterhin mindestens eine Verpackungsstation (118) zum Einbringen der Gefäße (124) in die Umverpackung aufweist, wobei die Auslesevorrichtung (110) der Verpackungsstation (118) vorgelagert ist und wobei die Verpackungsvorrichtung (114) eingerichtet ist, um zunächst maschinenlesbare Markierungen (120) auf den Gefäßen (124) auszulesen und anschließend die Gefäße (124) vollständig oder teilweise der Verpackungsstation (118) zuzuführen.

14. Verwendung einer Auslesevorrichtung (110) nach einem der eine Auslesevorrichtung (110) betreffenden Ansprüche 1-11 zu einem Zweck, ausgewählt aus der Gruppe bestehend aus: einem Untermischungsschutz bei der Befüllung pharmazeutischer oder diagnostischer Behältnisse; einer Fälschungssicherung zur Erkennung gefälschter Produkte; einem Verwechslungsschutz bei der Verpackung einer Mehrzahl von Gefäßen (124) in mindestens einer Umverpackung; einer Bildung einer Verpackungshierarchie zur Verfolgung der Behältnisse durch Verkaufskanäle.

15. Verfahren zum Auslesen maschinenlesbarer Markierungen (120) auf mindestens einer Mantelfläche (122) von Gefäßen (124), wobei die Gefäße (124) nacheinander auf mindestens einer Rollfläche (128) abgerollt werden und dabei zumindest ein Teil der Mantelfläche (122) innerhalb mindestens eines Sichtbereichs (166) mindestens eines optischen Detektors (162) abgerollt wird, wobei mittels des optischen Detektors (162) die maschinenlesbaren Markierungen (120) in dem Sichtbereich (166) erfasst werden, wobei mindestens eine Auslesevorrichtung (110) nach einem der eine Auslesevorrichtung (110) betreffended Ansprüche 1-11 zum Auslesen der maschinenlesbaren Markierungen (120) auf der mindestens einen Mantelfläche (122) der Gefäße (124) verwendet wird.

16. Verfahren zum Befüllen einer Mehrzahl von Gefäßen (124) mit mindestens einem Inhaltsstoff, wobei die Mehrzahl von Gefäßen (124) bereitgestellt wird, wobei mindestens eine maschinenlesbare Markierung (120) der Gefäße (124) mittels eines Verfahrens nach Anspruch 15 ausgelesen wird, wobei anschließend der mindestens eine Inhaltsstoff in die Gefäße (124) eingebracht wird.

17. Verfahren zum Verpacken einer Mehrzahl von Gefäßen (124) in mindestens einer Umverpackung, wobei die Mehrzahl von Gefäßen (124) bereitgestellt wird, wobei mindestens eine maschinenlesbare Markierung (120) der Gefäße (124) mittels eines Verfahrens nach ein Verfahren zum Auslesen maschinenlesbarer Markierungen (120) auf mindestens einer Mantelfläche (122) von Gefäßen (124) betreffendem Anspruch 15 ausgelesen wird, wobei anschließend die Gefäße (124) vollständig oder teilweise in die Umverpackung eingebracht werden.

## Revendications

1. Dispositif de lecture (110) destiné à lire des marquages lisibles par machine (120) sur au moins une surface latérale (122) de réceptacles (124), dans lequel le dispositif de lecture (110) comporte au moins un détecteur optique (162) ayant au moins une région de visualisation (166), dans lequel le détecteur optique (162) est conçu pour détecter les marquages lisibles par machine (120) dans la région de visualisation (166), dans lequel le dispositif de lecture (110) comporte en outre au moins une zone à rouleaux (128) et au moins un dispositif de transport (134), dans lequel le dispositif de lecture (110) est conçu pour faire rouler les réceptacles (124) consécutivement sur la zone à rouleaux (128) au moyen du dispositif de transport (134) et, ce faisant, pour faire rouler au moins une partie de la surface latérale (122) à l'intérieur de la région de visualisation (166), dans lequel le dispositif de transport (134) comprend au moins un transporteur à bande (135), **caractérisé en ce que** le transporteur à bande (135) se déplace à une certaine distance de la zone à rouleaux (128), dans lequel les réceptacles (124) peuvent être disposés entre le transporteur à bande (135) et la zone à rouleaux (128), et dans lequel le transporteur à bande (135) est conçu pour se déplacer par rapport à la zone à rouleaux (128) et pour faire rouler les réceptacles (124) sur la zone à rouleaux (128).

2. Dispositif de lecture (110) selon la revendication précédente, dans lequel le détecteur optique (162) comprend une caméra (164), dans lequel la région de visualisation (166) couvre un angle solide détectable par la caméra (164).

3. Dispositif de lecture (110) selon l'une des revendications précédentes, dans lequel la région de visualisation (166) et la zone à rouleaux (128) ont des dimensions telles que les réceptacles (124) sont amenés à rouler au moins une fois le long de la totalité de leur circonférence à l'intérieur de la région de visualisation (166).

4. Dispositif de lecture (110) selon l'une des revendications précédentes, dans lequel la zone à rouleaux (128) est conçue au moins en partie en tant que zone à rouleaux mobile (128, 192).

5. Dispositif de lecture (110) selon la revendication précédente, dans lequel le dispositif de lecture (110) est conçu pour déplacer la zone à rouleaux mobile (128, 192) d'une manière différente dans au moins deux phases de fonctionnement différentes.

6. Dispositif de lecture (110) selon l'une quelconque des deux revendications précédentes, dans lequel la zone à rouleaux mobile (128, 192) comporte au moins une partie mobile (184) qui est formée par un second transporteur à bande (186) ou par une surface d'un second transporteur à bande (186) se trouvant en face des réceptacles (124) ou dans lequel la zone à rouleaux mobile (128, 192) est la surface d'un second transporteur à bande (186) se trouvant en face des réceptacles (124).

7. Dispositif de lecture (110) selon l'une des revendications précédentes, dans lequel le dispositif de lecture (110) comporte en outre un poste d'alimentation (144), dans lequel le poste d'alimentation (144) est conçu pour délivrer consécutivement les réceptacles (124) à la zone à rouleaux (128).

8. Dispositif de lecture (110) selon la revendication précédente, dans lequel la station d'alimentation (144) est conçue pour aligner et/ou individualiser les réceptacles (124) avant et/ou pendant le processus d'alimentation.

9. Dispositif de lecture (110) selon l'une des revendications précédentes, comprenant en outre au moins une commande (168), dans lequel la commande (168) est connectée au détecteur optique (162) et dans lequel la commande (168) est conçue pour évaluer au moins une information concernant les marquages lisibles par machine (120), fournie par le détecteur optique (162).

10. Dispositif de lecture (110) selon l'une des revendications précédentes, dans lequel le dispositif de lecture (110) comporte en outre au moins un dispositif de sélection (170), dans lequel le dispositif de lecture (110) est conçu pour trier les réceptacles (124) au moyen du dispositif de sélection (170) conformément à un résultat de la lecture des marquages lisibles par machine (120).

11. Dispositif de lecture (110) selon l'une des revendications précédentes, dans lequel le dispositif de lecture (110) comporte en outre au moins un dispositif d'éclairage (167), dans lequel le dispositif d'éclairage (167) est conçu pour éclairer au moins une partie de la région de visualisation (166).

12. Dispositif de remplissage (112) destiné à remplir une pluralité de réceptacles (124) d'au moins un contenu, dans lequel le dispositif de remplissage (112) comporte au moins un dispositif de lecture (110) selon l'une des revendications précédentes, dans lequel le dispositif de remplissage (112) comporte au moins un poste de remplissage (116) destiné à introduire le contenu dans les réceptacles (124), dans lequel le dispositif de lecture (110) est disposé en amont ou en aval du poste de remplissage (116) et dans lequel le dispositif de remplissage (112) est conçu pour lire des marquages lisible par machine (120) sur les réceptacles (124) et pour délivrer les réceptacles (124) en totalité ou en partie au poste de remplissage (116).

13. Dispositif de conditionnement (114) destiné à conditionner une pluralité de réceptacles (124) dans au moins un conditionnement extérieur, dans lequel le dispositif de conditionnement (114) comporte au moins un dispositif de lecture (110) selon l'une des revendications 1 - 11 concernant un dispositif de lecture (110), dans lequel le dispositif de conditionnement (114) comporte en outre au moins un poste de conditionnement (118) destiné à introduire les réceptacles (124) dans le conditionnement extérieur, dans lequel le dispositif de lecture (110) est disposé en amont du poste de conditionnement (118) et dans lequel le dispositif de conditionnement (114) est conçu pour lire en premier lieu des marquages lisibles par machine (120) sur les réceptacles (124) puis pour délivrer les réceptacles (124) en totalité ou en partie au poste de remplissage (118).

14. Utilisation d'un dispositif de lecture (110) selon l'une des revendications 1 - 11 concernant un dispositif de lecture (110) dans un but sélectionné dans le groupe comprenant : la protection d'un mélange lors du remplissage de récipients pharmaceutiques ou de diagnostic ; la protection contre la fraude pour l'identification de produits d'imitation ; la protection contre la confusion lors du conditionnement d'une pluralité de réceptacles (124) dans au moins un conditionnement extérieur ; la formation d'une hiérarchie de conditionnements pour le suivi de récipients dans les canaux de vente.

15. Procédé de lecture de marquages lisibles par machine (120) sur au moins une surface latérale (122) de réceptacles (124), dans lequel les réceptacles (124) sont amenés à rouler consécutivement sur au moins une zone à rouleaux (128) et, ce faisant, au moins une partie de la surface latérale (122) est amenée à rouler à l'intérieur d'au moins une région de visualisation (166) d'au moins un détecteur optique (162), dans lequel les marquages lisibles par machine (120) présents dans la région de visualisation (166) sont détectés au moyen du détecteur optique (162), dans lequel au moins un dispositif de lecture (110) selon l'une des revendications 1 - 11 concernant un dispositif de lecture (110) est utilisé pour lire les marquages lisibles par machine (120) sur l'au moins une surface latérale (122) des réceptacles (124).

16. Procédé de remplissage d'une pluralité de réceptacles (124) d'au moins un contenu, dans lequel la pluralité de réceptacles (124) est fournie, dans lequel au moins un marquage lisible par machine (120) des réceptacles (124) est lu au moyen d'un procédé selon la revendication 15, dans lequel l'au moins un contenu est ensuite introduit dans les réceptacles (124).

17. Procédé de conditionnement d'une pluralité de réceptacles (124) dans au moins un conditionnement extérieur, dans lequel la pluralité de réceptacles (124) est fournie, dans lequel au moins un marquage lisible par machine (120) des réceptacles (124) est lu au moyen d'un procédé selon la revendication 15 concernant un procédé de lecture de marquages lisibles par machine (120) sur au moins une surface latérale (122) de réceptacles (124), dans lequel les réceptacles (124) sont ensuite introduits en totalité ou en partie dans le conditionnement extérieur.
